# EUROPEAN PATENT APPLICATION

(11) **EP 4 604 567 A2**
(43) Date of publication of application: **20.08.2025**
(21) Application number: 24213268.6
(22) Date of filing: 15.11.2024
(51) Int. Cl.: H04N 23/90, H04N 17/00, G06T 7/00, G06T 7/60, G06T 7/70, G06T 7/80, H01M 10/12, H01M 10/04, H01M 10/0583, H01M 10/0585

(54) **CAMERA CALIBRATION DEVICE, METHOD OF CALIBRATING CAMERA USING THE SAME, AND ELECTRODE ASSEMBLY MANUFACTURING DEVICE INCLUDING THE SAME**

(30) Priority: 16.02.2024 KR 20240022525
(71) Applicant: SAMSUNG SDI CO., LTD., Yongin-si, Gyeonggi-do 17084 (KR)
(72) Inventor: Lagunovsky, Dmitry, 16678 Suwon-si, Gyeonggi-do (KR); Kim, Joon Kil, 16678 Suwon-si, Gyeonggi-do (KR); Yu, Ju Heon, 16678 Suwon-si, Gyeonggi-do (KR); Choi, Ha Hyun, 16678 Suwon-si, Gyeonggi-do (KR); Hwang, Sun Uk, 16678 Suwon-si, Gyeonggi-do (KR)
(74) Representative: Gulde & Partner

(57) **Abstract**

A camera calibration device includes a calibration board detachably mounted on an upper surface of a stack table (100) and to which a predefined calibration pattern is applied, a plurality of cameras (600) installed above the stack table (100), and a processor (700) connected to the plurality of cameras (600), wherein, if the calibration board is mounted, the processor (700) is configured to perform calibration on each of the plurality of cameras (600) based on calibration patterns of calibration board images obtained from each of the plurality of cameras (600).

## Description

### BACKGROUND

### 1. Field

Embodiments relate to a camera calibration device, a method of calibrating a camera using the same, and an electrode assembly manufacturing device including the same.

### 2. Discussion of the Related Art

Generally, secondary batteries are batteries capable of charging and discharging unlike primary batteries for which charging is impossible. Low capacity batteries in which one battery cell is packaged into a pack form are used for small portable electronic devices such as portable phones and camcorders, and large capacity batteries in which several tens of battery cells are connected are used as motor driving power sources for electric bikes, electric scooters, hybrid cars, and electric cars.

A secondary battery typically has an electrode assembly provided with an anode, a cathode, and a separation membrane, which are sequentially stacked, is accommodated in a case with an electrolyte or solid electrolyte. Such electrode assemblies may be mainly divided into a jelly-roll type (winding type) electrode assembly having a structure in which an anode and a cathode, which are formed in long sheet shapes, are wound in a state in which a separation membrane is interposed between the anode and the cathode, and a stack type electrode assembly in which a plurality of anodes and cathodes are sequentially stacked in a state in which separation membranes are interposed between the plurality of anodes and cathodes. Jelly-roll type electrode assemblies are mainly used for small secondary batteries, and stack type electrode assemblies are used for medium and large secondary batteries having larger electricity capacity.

Meanwhile, if an electrode assembly is manufactured, a constant distance should be maintained between a cathode and an anode, a stacking state should be checked after the electrode assembly is manufactured, and if the electrode assembly fails, an entire cell stack should be discarded.

However, conventionally, even if a cell stack is inspected using an inspection device such as a computed tomography (CT) device, since a location of an electrode plate is not accurately viewed due to a separation membrane, there is a problem that a failure rate of the cell stack is high. In addition, since a failure of the electrode plate should be determined by inspecting the completely manufactured cell stack, and the entire cell stack should be discarded, there is a problem that the productivity is reduced.

The above information disclosed in this Background section is for enhancement of understanding of the background of the present disclosure.

### SUMMARY

Embodiments include a camera calibration device, including a calibration board detachably mounted on an upper surface of a stack table and to which a predefined calibration pattern is applied, a plurality of cameras installed above the stack table, and a processor connected to the plurality of cameras, wherein, if the calibration board is mounted, the processor performs calibration on each of the plurality of cameras based on calibration patterns of calibration board images obtained from each of the plurality of cameras.

The plurality of cameras may be installed at locations around a first end guide member and a second end guide member, the locations may be fixed in a front end of a folding part configured to fold a separation membrane on the stack table and which may guide the separation membrane to move toward the folding part, the plurality of cameras may include a first camera installed at one side of the first end guide member to capture an edge image of a first electrode plate, a second camera installed at an other side of the first end guide member to capture an edge image of the first electrode plate, a third camera installed at one side of the second end guide member to capture an edge image of a second electrode plate, and a fourth camera installed at an other side of the second end guide member to capture an edge image of the second electrode plate.

The calibration pattern may include a first pattern for local calibration for calibrating optical parameters and locations of the plurality of cameras, and may include a second pattern for global calibration for setting coordinates of the plurality of cameras to global coordinates.

The processor may measure optical parameter information including at least one of focus, brightness, and resolution of each of the plurality of cameras based on the calibration pattern, resulting in measured optical parameter information, and may calibrate the measured optical parameter information according to a preset target value.

The processor may move each of the plurality of cameras on the calibration board based on location information of a manufacturing target electrode plate.

The processor may perform the global calibration by assigning global coordinate values to the calibration pattern and may map the locations of the plurality of cameras to the global coordinate values.

Embodiments include an electrode assembly manufacturing device, including a plurality of electrode plate supply parts, each of which supplies any one electrode plate of an anode or a cathode, a separation membrane supply part which supplies a separation membrane between electrode plates supplied from the plurality of electrode plate supply parts, a folding part which moves with respect to a stack table to fold the separation membrane on the stack table, a plurality of cameras installed above the stack table and which capture edge images of the electrode plates stacked on the stack table whenever the electrode plates are stacked on the stack table, and a processor which calculates corner points of the electrode plates based on the edge images of the electrode plates captured by the plurality of cameras.

An optical parameter and a location of each of the plurality of cameras may be calibrated, and global coordinates of the plurality of cameras may be set.

The electrode assembly manufacturing device may further include a guide part on a moving path of the separation membrane from the separation membrane supply part to the folding part and guides movement of the separation membrane, wherein the plurality of cameras may include a first camera installed at one side of a first end guide member of the guide part to capture a first edge image of a first electrode plate, a second camera installed at an other side of the first end guide member of the guide part to capture a second edge image of the first electrode plate, a third camera installed at one side of a second end guide member of the guide part to capture a third edge image of a second electrode plate, and a fourth camera installed at an other side of the second end guide member of the guide part to capture a fourth edge image of the second electrode plate.

The processor may generate a first edge line connecting coordinates between the plurality of cameras on a first edge image and a second edge image of a first electrode plate and a third edge image and a fourth edge image of a second electrode plate captured by the plurality of cameras in a straight line and a second edge line being a straight line perpendicular to the first edge line, and may calculate an intersecting point at which the first edge line and the second edge line intersect as a corner point of the first electrode plate and the second electrode plate.

The processor may calculate a distance between the first electrode plate and the second electrode plate using coordinates of corner points of the first electrode plate calculated from previously captured edge images of the first electrode plate and coordinates of corner points of the second electrode plate calculated from currently captured edge images of the second electrode plate.

Embodiments include a method of calibrating a camera, the method including mounting a calibration board to which a predefined calibration pattern has been applied on an upper surface of a stack table, receiving, by a processor, calibration board images from a plurality of cameras, and performing, by the processor, calibration on each of the plurality of cameras based on calibration patterns of the calibration board images.

The receiving may include the processor moving each of the plurality of cameras on the calibration board based on location information of a manufacturing target electrode plate, and receiving the calibration board images captured by each of the plurality of cameras.

The predefined calibration pattern may include a first pattern for local calibration for calibrating optical parameters and locations of the plurality of cameras, and may include a second pattern for global calibration for setting coordinates of the plurality of cameras to global coordinates.

In performing the calibration, the processor may measure optical parameter information including at least one of focus, brightness, and resolution of each of the plurality of cameras based on the calibration pattern, resulting in measured optical parameter information, and may calibrate the measured optical parameter information according to a preset target value.

In performing the calibration, the processor may perform the global calibration by assigning the calibration pattern to global coordinate values and may map locations of the plurality of cameras to the global coordinate values.

The method may further include, after the performing of the calibration, if the calibration board is removed from the stack table and a separation membrane is alternately stacked between a first electrode plate and a second electrode plate on the stack table, receiving, by the processor, edge images of at least one of the first electrode plate, the second electrode plate, and the separation membrane stacked on the stack table from one of the plurality of cameras whenever the at least one of the first electrode plate, the second electrode plate, and the separation membrane is stacked on the stack table, and calculating, by the processor, corner points of a corresponding electrode plate based on the edge images.

In the calculating of the corner points, the processor may generate a first edge line connecting coordinates between the plurality of cameras on a first edge image and a second edge image of the first electrode plate and a third edge image and a fourth edge image of the second electrode plate captured by the plurality of cameras in a straight line and a second edge line being a straight line perpendicular to the first edge line, and may calculate an intersecting point at which the first edge line and the second edge line intersect as a corner point of the first electrode plate and the second electrode plate.

The method may further include, after the calculating of the corner points, calculating, by the processor, a distance between the first electrode plate and the second electrode plate using the corner points of the first electrode plate and the corner points of the second electrode plate.

In the calculating of the distance, the processor may calculate the distance between the first electrode plate and the second electrode plate using coordinates of the corner points of the first electrode plate calculated from the edge images of the first electrode plate and coordinates of the corner points of the second electrode plate calculated from the edge images of the second electrode plate.

All embodiments described in this specification may be advantageously combined with one another to the extent that their respective features are compatible. In particular, the expressions "according to an embodiment," "in an embodiment," "an embodiment of the invention provides" etc. mean that the respective features may or may not be part of specific embodiments of the present invention.

### BRIEF DESCRIPTION OF DRAWINGS

Features will become apparent to those of ordinary skill in the art by describing in detail exemplary embodiments with reference to the attached drawings, in which:
FIG. 1 is a schematic view illustrating an electrode assembly manufacturing device according to one or more embodiments of the present disclosure;
FIG. 2 is an exemplary view for describing installation locations of cameras according to one or more embodiments of the present disclosure;
FIG. 3 is an exemplary view for describing a calibration pattern according to one or more embodiments of the present disclosure;
FIG. 4 is an exemplary view for describing location movement of a camera according to one or more embodiments of the present disclosure;
FIG. 5 is an exemplary view for describing global calibration according to one or more embodiments of the present disclosure;
FIGS. 6A and 6B show exemplary views for describing calculation of a corner point of an electrode plate according to one or more embodiments of the present disclosure;
FIG. 7 is an exemplary view for describing calculation of a distance between electrode plates according to one or more embodiments of the present disclosure;
FIG. 8 is a flowchart illustrating a method of calibrating the camera according to one or more embodiments of the present disclosure; and
FIG. 9 is a flowchart illustrating a method of measuring a distance between a cathode and an anode according to one or more embodiments of the present disclosure.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey exemplary implementations to those skilled in the art.

In the drawing figures, the dimensions of layers and regions may be exaggerated for clarity of illustration. It will also be understood that if a layer or element is referred to as being "on" another layer or substrate, it can be directly on the other layer or substrate, or intervening layers may also be present. Further, it will be understood that if a layer is referred to as being "under" another layer, it can be directly under, and one or more intervening layers may also be present. In addition, it will also be understood that if a layer is referred to as being "between" two layers, it can be the only layer between the two layers, or one or more intervening layers may also be present. Like reference numerals refer to like elements throughout.

The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term to explain in his/her own best way.

The embodiments described in this specification and the configurations shown in the drawings are only some of the embodiments of the present disclosure and do not represent all of the technical ideas, aspects, and features of the present disclosure. Accordingly, it should be understood that there may be various equivalents and modifications that can replace or modify the embodiments described herein at the time of filing this application.

It will be understood that if an element or layer is referred to as being "on," "connected to," or "coupled to" another element or layer, it may be directly on, connected, or coupled to the other element or layer or one or more intervening elements or layers may also be present. If an element or layer is referred to as being "directly on," "directly connected to," or "directly coupled to" another element or layer, there are no intervening elements or layers present. For example, if a first element is described as being "coupled" or "connected" to a second element, the first element may be directly coupled or connected to the second element or the first element may be indirectly coupled or connected to the second element via one or more intervening elements.

As used herein, the term "and/or" includes any and all combinations of one or more of the associated listed items. Further, the use of "may" if describing embodiments of the present disclosure relates to "one or more embodiments of the present disclosure." Expressions, such as "at least one of' and "any one of," if preceding a list of elements, modify the entire list of elements and do not modify the individual elements of the list. If phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," if used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification such that amending to expressly recite any such subranges would comply with the requirements of 35 U.S.C. § 112(a) and 35 U.S.C. § 132(a).

References to two compared elements, features, etc. as being "the same" may mean that they are "substantially the same". Thus, the phrase "substantially the same" may include a case having a deviation that is considered low in the art, for example, a deviation of 5% or less. In addition, if a certain parameter is referred to as being uniform in a given region, it may mean that it is uniform in terms of an average.

Throughout the specification, unless otherwise stated, each element may be singular or plural.

If an arbitrary element is referred to as being disposed (or located or positioned) on the "above (or below)" or "on (or under)" a component, it may mean that the arbitrary element is placed in contact with the upper (or lower) surface of the component and may also mean that another component may be interposed between the component and any arbitrary element disposed (or located or positioned) on (or under) the component.

In addition, it will be understood that if an element is referred to as being "coupled," "linked" or "connected" to another element, the elements may be directly "coupled," "linked" or "connected" to each other, or an intervening element may be present therebetween, through which the element may be "coupled," "linked" or "connected" to another element. In addition, if a part is referred to as being "electrically coupled" to another part, the part can be directly connected to another part or an intervening part may be present therebetween such that the part and another part are indirectly connected to each other.

Throughout the specification, if "A and/or B" is stated, it means A, B or A and B, unless otherwise stated. That is, "and/or" includes any or all combinations of a plurality of items enumerated. If "C to D" is stated, it means C or more and D or less, unless otherwise specified.

The term "part" used in the present specification may include a unit implemented using hardware, software, or firmware and may be interchangeably used with terms such as "logic," "logical block," "component," and "circuit." A "part" may be an integrally formed component or a minimum unit or a part of a component serving one or more functions. For example, a "part" may be implemented as a type of application-specific integrated circuit (ASIC) according to one embodiment.

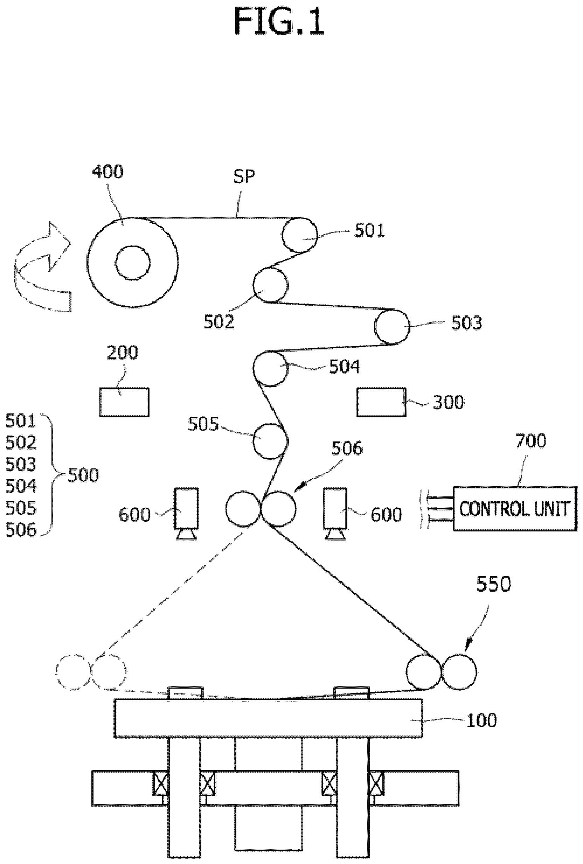

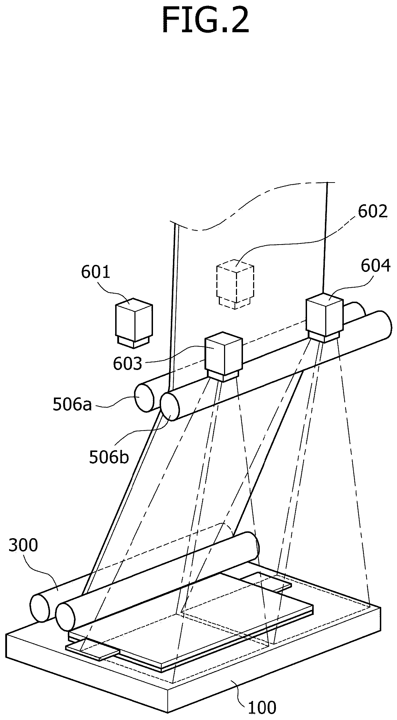

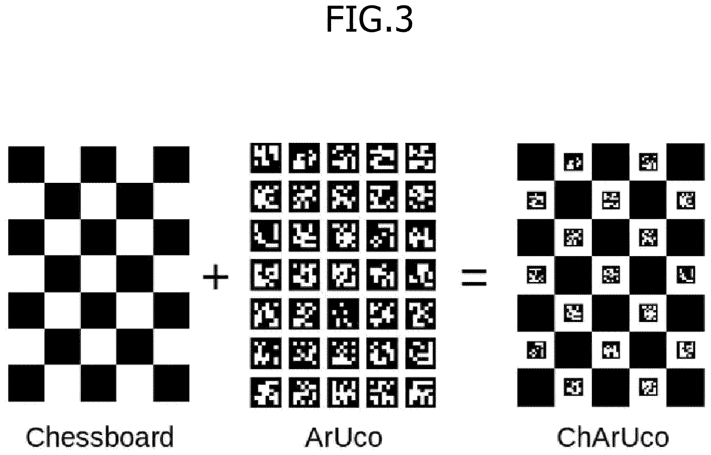

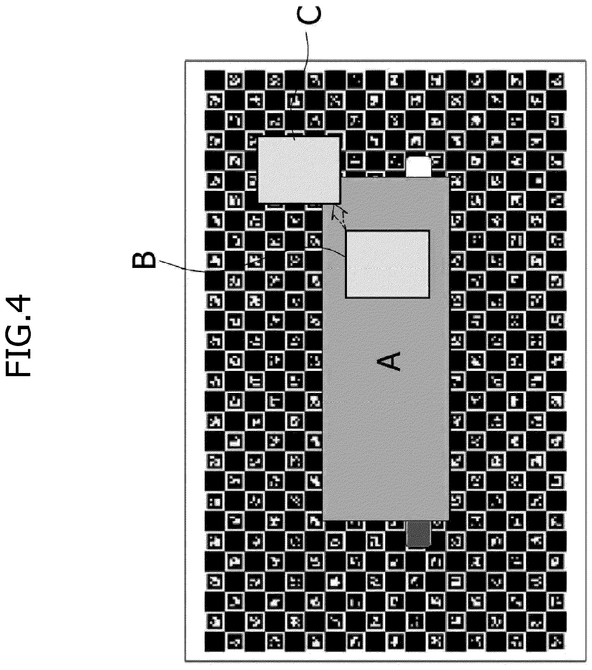

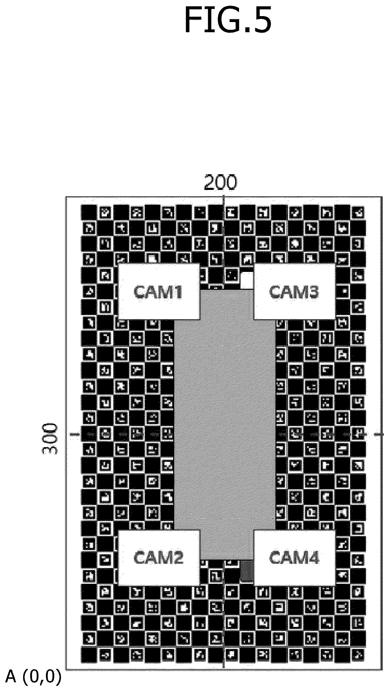

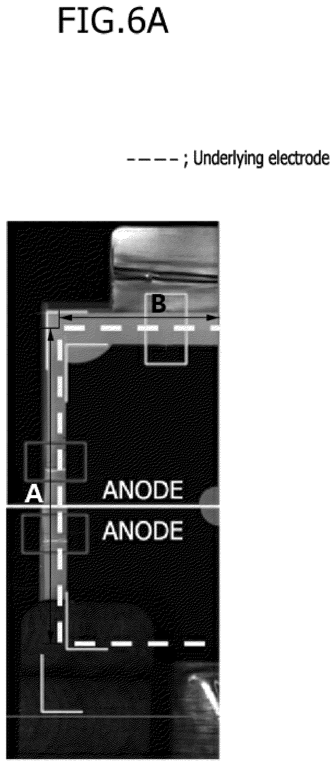

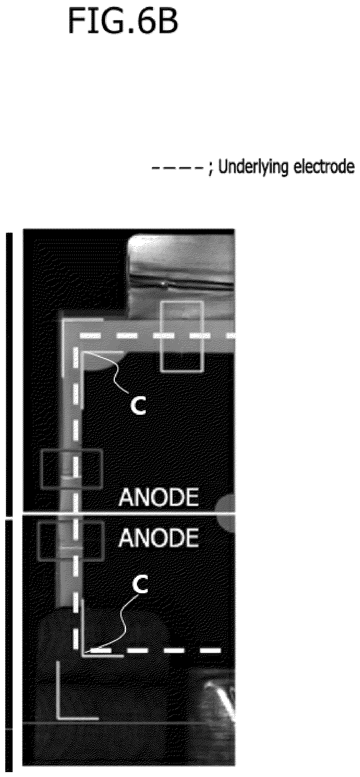

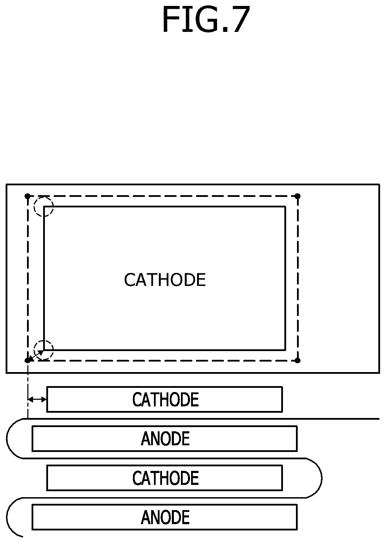

FIG. 1 is a schematic view illustrating an electrode assembly manufacturing device according to one or more embodiments of the present disclosure, and FIG. 2 is an exemplary view for describing installation locations of cameras according to one or more embodiments of the present disclosure. FIG. 3 is an exemplary view for describing a calibration pattern according to one or more embodiments of the present disclosure, and FIG. 4 is an exemplary view for describing location movement of a camera according to one or more embodiments of the present disclosure. FIG. 5 is an exemplary view for describing global calibration according to one or more embodiments of the present disclosure, and FIGS. 6A and 6B show exemplary views for describing calculation of a corner point of an electrode plate according to one or more embodiments of the present disclosure. FIG. 7 is an exemplary view for describing calculation of a distance between electrode plates according to one or more embodiments of the present disclosure.

Referring to FIG. 1, the electrode assembly manufacturing device according to one or more embodiments of the present disclosure may include a stack table 100, a first loading part 200, a second loading part 300, a separation membrane supply part 400, a guide part 500, a folding part 550, cameras 600, and a processor 700.

The stack table 100 may provide a space in which electrode plates are stacked on a separation membrane SP.

The first loading part 200 may be configured to transfer first electrode plates supplied from a first electrode plate supply part (not shown) one by one. For example, the first electrode plate supply part may include a first electrode plate supply roll. The first electrode plates may be wound around the first electrode plate supply roll. In addition, as the first electrode plate supply roll rotates, the first electrode plates may be unwound and supplied to the first electrode plate supply part. Accordingly, the first electrode plates are continuously supplied.

In addition, each first electrode plate may act as an anode or cathode. In addition, an active material layer may be on both surfaces of the first electrode plate according to a polarity thereof.

The second loading part 300 may be configured to transfer second electrode plates supplied from a second electrode plate supply part (not shown) one by one. For example, the second electrode plate supply part may include a second electrode plate supply roll. The second electrode plates may be wound around the second electrode plate supply. In addition, as the second electrode plate supply roll rotates, the second electrode plates may be unwound and supplied to the second electrode plate supply part. Accordingly, the second electrode plates are continuously supplied.

Further, the second electrode plate and the first electrode plate have opposite polarities. In addition, an active material layer may be on both surfaces of each second electrode plate according to a polarity thereof.

The first electrode plate supply part and the second electrode plate supply part may unwind rolls around which electrodes are wound and supply the first and second electrode plates each having a predetermined length one by one to the stack table 100. For example, the first and second electrode plate supply parts may alternately supply the first and second electrode plates to the stack table 100.

The separation membrane supply part 400 may unwind a roll around which the separation membrane SP is wound and supply the separation membrane SP with a constant tension to the stack table 100.

The separation membrane supply part 400 may be located at a frontmost end of a moving path of the separation membrane SP in a direction in which the separation membrane SP is moved, and may supply the separation membrane SP. The separation membrane supply part 400 may be implemented as an unwinder which unwinds the wound separation membrane SP and supplies the separation membrane SP to a first guide member 501. The separation membrane supply part 400 may be configured to rotate at a predefined rotation speed and may unwind the separation membrane SP, and accordingly, a constant supply speed of the separation membrane SP may be maintained to correspond to the rotation speed.

The guide part 500 may be provided on the moving path of the separation membrane SP from the separation membrane supply part 400 to the folding part 550 and may guide movement of the separation membrane SP. The guide part 500 may include first to Nth (N is a natural number greater than or equal to two) guide members 501 to 506 as a plurality of guide members provided on the moving path of the separation membrane SP, and the first to Nth guide members 501 to 506 may be sequentially disposed in the direction in which the separation membrane SP is moved. Each of the guide members 501 to 506 may be implemented as a guide roller which guides the movement of the separation membrane SP though rotation. Meanwhile, in order to facilitate understanding of the present disclosure, the Nth guide member of which a location is fixed to an end of the moving path of the separation membrane SP (that is, a front end of the folding part 550) to guide the separation membrane SP to move through the folding part 550 will be denoted as an "end guide member" 506.

The folding part 550 may be configured to fold the separation membrane SP on the stack table 100 in a method of reciprocating between points symmetrically located with respect to a center of the stack table 100. The folding part 550 may be implemented as a final roller, which finally supplies the separation membrane SP to the stack table 100, and provided as one pair of roller members. Accordingly, one pair of rollers constituting the folding part 550 may rotate in opposite directions, the separation membrane SP may be input between the one pair of rollers, the separation membrane SP may be output from between the one pair of rollers, and in a state in which the separation membrane SP is input and output, the folding part 550 may move (e.g., horizontally) to fold the separation membrane SP on the stack table 100.

The folding part 550 may be configured to repeatedly perform a process of folding the separation membrane SP supplied by the separation membrane supply part 400 and stacking the first and second electrode plates supplied by the first and second electrode plate supply parts on the separation membrane SP.

The electrode assembly manufacturing device provided as described above may manufacture a cell stack (electrode assembly) by repeatedly sequentially stacking the separation membrane SP, the first electrode plate, the separation membrane SP, the second electrode plate, and the separation membrane SP.

The cameras 600 may capture images of alignment states of the electrode plates to inspect the alignment states of the electrode plates in a process of stacking the electrode plates.

The cameras 600 may be installed above the stack table 100 and capture the images of the electrode plates (the anode and the cathode) stacked on the stack table 100. The cameras 600 may be implemented as, for example, cameras.

As illustrated in FIG. 2, locations of the cameras 600 may be fixed in a front end of the folding part 550 on the moving path of the separation membrane SP from the separation membrane supply part 400 to the folding part 550, and the cameras 600 may be installed around a first end guide member 506a and a second end guide member 506b which guide the separation membrane SP to move toward the folding part 550.

The cameras 600 may include a first camera 601 installed at one side or end of the first end guide member 506a, a second camera 602 installed at the other side or end of the first end guide member 506a, a third camera 603 installed at one side or end of the second end guide member 506b, and a fourth camera 604 installed at the other side or end of the second end guide member 506b. That is, the first camera 601 may be installed at one side of the first end guide member 506a to capture an edge image of the electrode plate. The second camera 602 may be installed at the other side of the first end guide member 506a to capture an edge image of the electrode plate. The third camera 603 may be installed at one side of the second end guide member 506b to capture an edge image of the electrode plate. The fourth camera 604 may be installed at the other side of the second end guide member 506b to capture an edge image of the electrode plate.

The first to fourth cameras 601, 602, 603, and 604 may capture images of corners (edges) of the electrode plates (the anode and the cathode) stacked on the stack table 100. In this case, the different cameras may operate according to a type of the currently stacked electrode plate. For example, if the anode is stacked, the first camera 601 and the second camera 602 installed to capture edge images of the anode may operate. In addition, if the cathode is stacked, the third camera 603 and the fourth camera 604 installed to capture edge images of the cathode may operate.

Hereinafter, for the sake of convenience in the description, it will be described that the first camera 601 and the second camera 602 capture an image of the anode and the third camera 603 and the fourth camera 604 capture an image of the cathode.

The processor 700 may inspect a distance between the anode and the cathode based on the edge images of the electrode plates captured by the first to fourth cameras 601, 602, 603, and 604.

However, even if the distance between the anode and the cathode is inspected by capturing the images of the corners of the electrode plates using the cameras 600, the electrode plates may not be accurately viewed due the separation membrane SP, and thus a failure rate of the cell stack may increase. Accordingly, a calibration operation for correcting locations of the cameras 600 may be performed.

Accordingly, the electrode assembly manufacturing device according to one or more embodiments of the present disclosure performs calibration for correcting locations between the cameras 600 before manufacturing the electrode assembly.

To this end, in the electrode assembly manufacturing device according to one or more embodiments of the present disclosure, a calibration board (not shown) to which a predefined calibration pattern is applied may be mounted on an upper surface of the stack table 100, and optical parameters, locations, and the like of the cameras 600 may be calibrated using the calibration board.

The predefined calibration pattern may be applied to the calibration board. In this case, the calibration pattern may include a first pattern for local calibration for calibrating the optical parameters and the locations of the cameras 600 and a second pattern for global calibration for setting coordinates of the cameras 600 in a common coordinate system.

For example, a ChArUco pattern may be applied as the calibration pattern. As illustrated in FIG. 3, the ChArUco pattern may be a pattern in which a chessboard (first pattern) and an ArUco (second pattern) are combined. A ChArUco board may have a unique pattern, and the calibration of the cameras 600 may be more accurately performed by combining an advantage of a chessboard pattern and an ArUco marker. The ArUco marker may have a unique pattern, and the locations and directions of the cameras 600 may be estimated using the ArUco marker. In addition, corners of the ChArUco pattern may be used as reference points of the calibration.

The calibration board may be fixedly installed on the stack table 100 using a mounting calibration board jig. Accordingly, a size of the calibration board to which the calibration pattern is applied may be smaller than that of the stack table 100 and greater than that of the electrode assembly. For example, the size of calibration board may be 300*200 mm (length*width). In addition, a grid of the calibration board may be, for example, 10 mm and may be manufactured of an aluminum material.

The processor 700 may be connected to the plurality of cameras 600 and may receive images captured by the cameras 600.

The processor 700 may perform calibration on the cameras 600 using the images obtained from the cameras 600 or by calculating corner points of the electrode plates or the separation membrane SP.

First, a method of calibrating the cameras 600 performed by the processor 700 will be described. To this end, the calibration board is mounted on the stack table 100.

If the calibration board is mounted on the stack table 100, the processor 700 may perform calibration on each of the cameras 600 based on calibration patterns of calibration board images obtained from each of the cameras 600. In this case, the processor 700 may perform local calibration for calibrating optical parameters and locations of the cameras 600 and perform global calibration for setting coordinates of the cameras 600 in a common coordinate system.

The processor 700 may measure optical parameter information including at least one of focus, brightness, and resolution of each of the cameras 600 based on the calibration pattern and calibrate the measured optical parameter information according to target values.

For example, the processor 700 may measure optical parameter information such as focus, black brightness, white brightness, resolution, and the like using the first pattern (the chessboard pattern) of the calibration pattern. Then, the processor 700 may compare the optical parameter information measured by each of the cameras 600 with preset target values and automatically or manually calibrate the optical parameter information of each of the cameras 600 according to the target values.

If the optical parameters are automatically calibrated, the camera 600 may be a camera device supporting autofocusing, and the processor 700 may automatically calibrate the optical parameter information of the camera 600 according to the target values.

If the optical parameters are manually calibrated, the processor 700 may output an optical setting guide allowing the optical parameter information of the camera 600 to become the target values through a display device (not shown). A user may then also manually calibrate the optical parameters of the camera 600 according to the optical setting guide output through the display device.

If the optical parameters of each of the cameras 600 are set according to the target values, the optical system may be set without deviations between the cameras 600.

In addition, the processor 700 may move the cameras 600 to locations predefined on the calibration board based on location information of the manufacturing target electrode plates.

For example, as illustrated in FIG. 4, if the manufacturing target electrode plate is portion A and the camera 600 is currently located to capture an image of portion B, the processor 700 may move a location of the camera 600 to capture an image of portion C. That is, since the camera 600 should be aligned to capture an image of a corner (edge) of the electrode plate, the processor 700 may move the location of the camera 600 to capture the image of portion C.

To this end, the processor 700 may prestore a location of the corner of the manufacturing target electrode plate and move the location of the cameras 600 to a corner location of the electrode plate.

Actuators (not shown) provided with motors, gears, and the like may be provided to move the cameras 600, and movement of the cameras 600 may be controlled by the processor 700.

Meanwhile, the cameras 600 of which the optical parameters and the locations are calibrated have local coordinates. Since the local coordinates are relative coordinates based on the electrode plate, it is difficult to determine interrelationships between the cameras 600 such as calculation of distances between the cameras 600 and the like.

Accordingly, even if the locations of the cameras 600 are calibrated, the common coordinate system for the plurality of cameras 600 may be used to calculate corner points of the electrode plate. This is because it is difficult to accurately calculate distances between the cameras 600 if there are no common coordinates (global coordinates) of the plurality of cameras 600.

Accordingly, the processor 700 may perform the global calibration for setting local coordinates of the plurality of cameras 600 to global coordinates. That is, the processor 700 may perform the global calibration by assigning global coordinate values to the calibration pattern and mapping locations of the cameras 600 to the global coordinates. In this case, the processor 700 may set the global coordinates of the cameras 600 by setting a reference point on the calibration pattern, assigning all corner points of the chessboard based on the reference point to global coordinate values, and mapping the locations of the cameras 600 to the global coordinates.

For example, as illustrated in FIG. 5, the processor 700 may set point A (0, 0) as a reference point in a calibration pattern and assign global coordinate values to all corner points of the calibration pattern based on point A. The processor 700 may then set global coordinate values corresponding to locations of the first camera (CAM1) 601, the second camera (CAM2) 602, the third camera (CAM3) 603, and the fourth camera (CAM4) 604 based on the global coordinate values of all the corner points of the calibration pattern.

If the local calibration and the global calibration for the cameras 600 are completed, the processor 700 may accurately measure a distance between the electrode plates (the cathode and the anode) based on images captured by the cameras 600 even in a process of alternately stacking the separation membrane SP between the cathode and the anode on the stack table 100.

In order to manufacture the electrode assembly, first, the calibration board is removed from the stack table 100.

After the calibration board is removed, the cameras 600 may continuously capture edge images of the cathode, the separation membrane SP, and the anode which are stacked on the stack table 100 in the process of alternately stacking the separation membrane SP between the cathode and the anode on the stack table 100.

The cameras 600 may capture the edge images of the electrode plates or the separation membrane SP stacked on the stack table 100 whenever the electrode plates or the separation membrane SP is stacked on the stack table 100, and transmit the captured edge images of the electrode plates or the separation membrane SP to the processor 700.

For example, the first camera 601 and the second camera 602 may capture edge images of the anode and transmit the captured edge images to the processor 700, and the third camera 603 and the fourth camera 604 may capture edge images of the cathode and transmit the captured edge images to the processor 700.

The processor 700 may find corner points of the electrode plates based on the edge images of the electrode plates captured by the cameras 600 and calculate distances between corner points of the first electrode plate calculated from previously captured edge images of the first electrode plate and corner points of the second electrode plate calculated from currently captured edge images of the second electrode plate. In this case, if the corner points of the electrode plates (or the separation membrane SP) are calculated, the processor 700 may use global fitting, which may be, for example, to connect coordinates between the cameras 600 so that an x-axis and a y-axis become straight lines. Since the locations of the cameras 600 are set to the global coordinate values, the global fitting may be performed. If the global fitting is used, a corner point measurement error due to delamination of the separation membrane SP can be reduced.

The processor 700 may generate a first edge line by connecting coordinates between the cameras 600 in a straight line on edge images of the electrode plate captured by the cameras 600, and a second edge line by drawing a straight line perpendicular to the first edge line, and calculate an intersecting point at which the first edge line and the second edge line intersect as a corner point of the electrode plate.

For example, as illustrated in FIG. 6A, the processor 700 may generate a first edge line A in a first direction by connecting a location of the first camera 601 and a location of the second camera 602. The processor 700 may then generate a second edge line B in a second direction by drawing a straight line perpendicular to an end of the first edge line A. Then, as illustrated in FIG. 6B, the processor 700 may calculate coordinate values corresponding to an intersecting point of the first edge line A and the second edge line B as a corner point C of the anode. Then, as illustrated in FIG. 7, the processor 700 may calculate a distance a between a corner point of the cathode (underlying electrode) and the corner point C of the anode.

As described above, the processor 700 may calculate corner points of the electrode plate (or the separation membrane SP) using the global fitting.

If the corner points of the electrode plates and the separation membrane SP are calculated, the processor 700 may calculate a distance between the previously stacked first electrode plate and the currently stacked second electrode plate using global coordinates. That is, the processor 700 may calculate a distance between the first electrode plate and the second electrode plate using coordinates of the corner points of the first electrode plate calculated using previously captured edge images of the first electrode plate and coordinates of the corner points of the second electrode plate calculated using currently captured edge images of the second electrode plate. In this case, the processor 700 may calculate the distance between the first electrode plate and the second electrode plate using the coordinates of the corner points of the first electrode plate, the coordinates of the corner points of the second electrode plate, and size information of the electrode plates.

As described above, the processor 700 may measure a distance between the cathode and the anode disposed under and hidden by the separation membrane SP using global coordinates. That is, the processor 700 may measure the distance between the cathode and the anode using the global coordinate system.

If a distance between the anode and the cathode is in a predetermined range, the processor 700 may continuously stack the electrode plates and the separation membrane SP to manufacture the electrode assembly. If a distance between the anode and the cathode is out of the predetermined range, the processor 700 may stop the manufacturing of the electrode assembly.

The processor 700 may be a main unit which controls the movement of the folding part 550 and the cameras 600 and may be implemented as a central processing unit (CPU), a system on chip (SoC), a processor, or a programmable logic controller (PLC), and a plurality of hardware or software components connected to the processor 700 may be controlled and various data processing and operations may be performed by driving an operating system or application. The processor 700 may be configured to execute at least one command stored in a memory (not shown) and store result data of the execution in the memory.

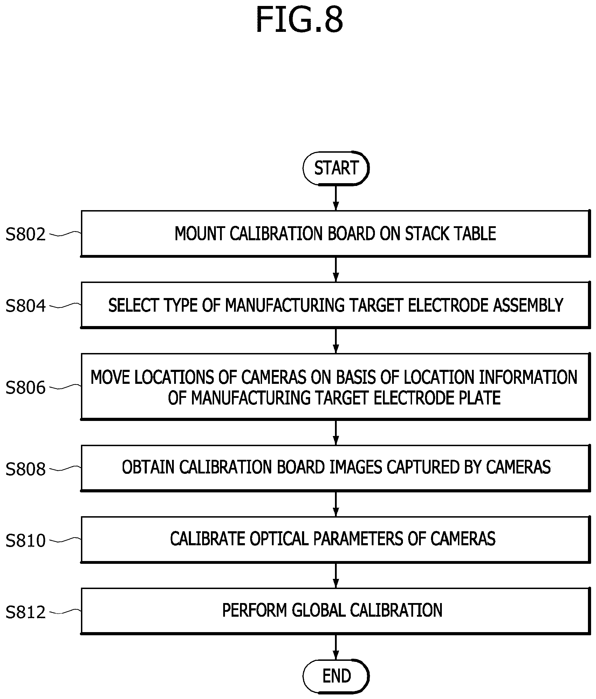

FIG. 8 is a flowchart illustrating a method of calibrating the camera according to one or more embodiments of the present disclosure.

Referring to FIG. 8, if a calibration board is mounted on the stack table 100 (S802) and a type of a manufacturing target electrode plate is selected (S804), the processor 700 may move locations of the cameras 600 based on location information of the manufacturing target electrode plate (S806). In this case, the calibration board may be a board to which a predefined calibration pattern is applied. If the type of the electrode plate is selected, the processor 700 may recognize information of the electrode plate (for example, the location information of the electrode plate). Accordingly, the processor 700 may move the cameras 600 to predefined locations on the calibration board based on the location information of the manufacturing target electrode plate.

After operation S806 is performed, the processor 700 may obtain calibration board images captured by the cameras 600 (S808).

After operation S808 is performed, the processor 700 may calibrate optical parameters of the cameras 600 based on calibration patterns of the calibration board images (S810). That is, the processor 700 may measure optical parameter information such as focus, black brightness, white brightness, and resolution using a first pattern (chessboard) of the calibration pattern. Then, the processor 700 may compare optical parameter information measured by the cameras 600 with preset target values and automatically or manually calibrate the optical parameter information of the cameras 600 according to the target values. If the optical parameters are automatically calibrated, the cameras 600 may be cameras capable of supporting autofocusing, and the processor 700 may automatically calibrate the optical parameter information of the cameras 600 according to the target values. If the optical parameters are manually calibrated, the processor 700 may output an optical setting guide, which allows the optical parameter information of the cameras 600 to become the target values, through the display device (not shown). Then, the user may also calibrate the optical parameters of the cameras 600.

After operation S810 is performed, the processor 700 may perform global calibration for setting local coordinates of the cameras 600 to global coordinates (S812). That is, the processor 700 may perform the global calibration by assigning global coordinate values to the calibration pattern and mapping the locations of the cameras 600 to the global coordinates. For example, the processor 700 may set the global coordinates of the cameras 600 by setting a reference point in the calibration pattern, assigning global coordinate values to all corner points of the calibration pattern (e.g., a chessboard pattern) based on the reference points, and mapping the locations of the cameras 600 to the global coordinates.

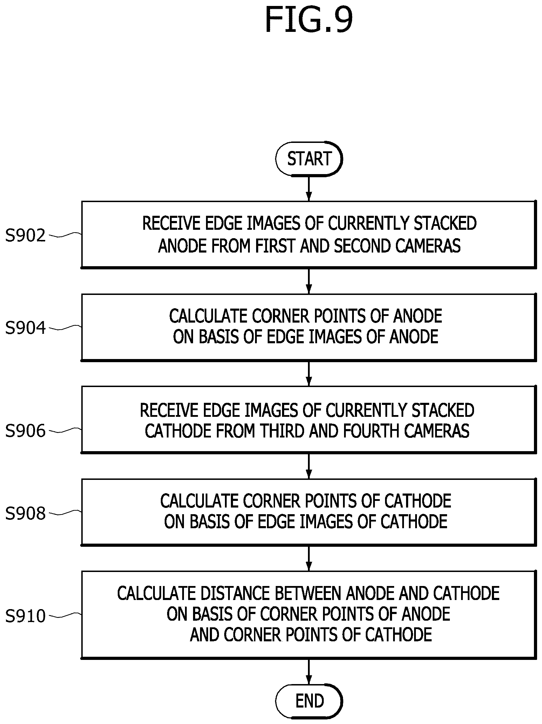

FIG. 9 is a flowchart illustrating a method of measuring a distance between a cathode and an anode according to the embodiment of the present disclosure.

Referring to FIG. 9, the processor 700 receives edge images of a currently stacked anode from the first camera 601 and the second camera 602 (S902).

After operation S902 is performed, the processor 700 may then calculate corner points of the anode based on the edge images of the anode (S904). In this case, the processor 700 may generate a first edge line by connecting coordinates of the first camera 601 and coordinates of the second camera 602 in a straight line, and a second edge line by drawing a straight line perpendicular to the first edge line. The processor 700 may then calculate an intersecting point at which the first edge line and the second edge line intersect as a corner point of the anode.

After operation S904 has been performed, the processor 700 may receive edge images of a currently stacked cathode from the third camera 603 and the fourth camera 604 (S906).

After operation S906 is performed, the processor 700 may calculate corner points of the cathode based on the edge images of the cathode (S908). In this case, the processor 700 may generate a first edge line by connecting coordinates of the third camera 603 and coordinates of the fourth camera 604 in a straight line and a second edge line by drawing a straight line perpendicular to the first edge line. The processor 700 may then calculate an intersecting point at which the first edge line and the second edge line intersect as a corner point of the cathode.

After operation S908 is performed, the processor 700 may calculate distances between corner points of the anode calculated in operation S904 and corner points of the cathode calculated in operation S908 (S910). In this case, the processor 700 may calculate a distance between two electrode plates using coordinates of the corner points of the anode and coordinates of the corner points of the cathode. The processor 700 may calculate the distance between the anode and the cathode using the coordinates of the corner points of the anode, the coordinates of the corner points of the cathode, and size information of the electrode plates.

According to the present disclosure described above, the optical system of the cameras may be set without deviation between the cameras by calibrating optical parameters of the plurality of cameras according to target values.

According to the present disclosure, edge images of an electrode plate can be accurately captured by automatically moving locations of the cameras based on information of a manufacturing target electrode plate, and thus corner points of the electrode plate can be accurately found.

According to the present disclosure, a distance between the cameras can be accurately measured and coordinates of corner points of an electrode plate can be accurately calculated by setting locations of the plurality of cameras using common coordinates (global coordinates).

Furthermore, a distance between a cathode and an anode can be accurately measured based on images captured by the cameras in a process of alternately stacking a separation membrane between the cathode and the anode on the stack table by performing local calibration and global calibration on the plurality of cameras.

The present disclosure described in this specification can be implemented through, for example, a method, a process, an apparatus, a software program, a data stream, or a signal. Even if the present disclosure is described as being implemented in only a single form (for example, as a method), the described features may be implemented in another form (for example, as an apparatus or program). The apparatus may be implemented using proper hardware, software, firmware, or the like. For example, the method may be implemented in an apparatus such as a processor or the like which is generally referred to as a processing device including a computer, a microprocessor, an integrated circuit, or a programmable logic device. The processor also includes a communication device such as a computer, a cell phone, a portable/personal digital assistant (PDA) terminal, or another device which facilitates communication of information between end users.

According to the present disclosure, an optical system of cameras can be set without deviation between the cameras by calibrating optical parameters of the plurality of cameras according to target values.

According to the present disclosure, edge images of an electrode plate can be accurately captured by automatically moving locations of cameras based on information of a manufacturing target electrode plate, and thus corner points of the electrode plate can be accurately found.

According to the present disclosure, a distance between cameras can be accurately measured and coordinates of corner points of an electrode plate can be accurately calculated by setting locations of the plurality of cameras using common coordinates (global coordinates).

According to the present disclosure, a distance between a cathode and an anode can be accurately measured based on images captured by cameras in a process of alternately stacking a separation membrane between the cathode and the anode on a stack table by performing local calibration and global calibration on the plurality of cameras.

However, effects that can be achieved through the present disclosure are not limited to the above-described effects and other effects that are not described may be clearly understood by those of ordinary skill in the art from the detailed descriptions.

Although the present disclosure has been described with reference to embodiments and drawings illustrating aspects thereof, the present disclosure is not limited thereto. Various modifications and variations can be made by a person skilled in the art to which the present disclosure belongs within the scope of the technical scope of the present disclosure as set forth in the appended claims.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the appended claims.

## Claims

1. A camera calibration device, comprising:
a calibration board detachably mounted on an upper surface of a stack table (100) and to which a predefined calibration pattern is applied;
a plurality of cameras (600) installed above the stack table (100); and
a processor (700) connected to the plurality of cameras (600),
wherein, if the calibration board is mounted, the processor (700) is configured to perform calibration on each of the plurality of cameras (600) based on calibration patterns of calibration board images obtained from each of the plurality of cameras (600).

2. The camera calibration device as claimed in claim 1, wherein the plurality of cameras (600) are installed at locations around a first end guide member (506a) and a second end guide member (506b), the locations being fixed in a front end of a folding part (550) configured to fold a separation membrane (SP) on the stack table (100) and which guides the separation membrane (SP) to move toward the folding part (550), the plurality of cameras (600) including:
a first camera (601) installed at one side of the first end guide member (506a) to capture an edge image of a first electrode plate;
a second camera (602) installed at an other side of the first end guide member (506a) to capture an edge image of the first electrode plate;
a third camera (603) installed at one side of the second end guide member (506b) to capture an edge image of a second electrode plate; and
a fourth camera (604) installed at an other side of the second end guide member (506b) to capture an edge image of the second electrode plate.

3. The camera (600) calibration device as claimed in claim 1 or 2, wherein the calibration pattern includes:
a first pattern for local calibration for calibrating optical parameters and locations of the plurality of cameras (600); and
a second pattern for global calibration for setting coordinates of the plurality of cameras (600) to global coordinates.

4. The camera (600) calibration device as claimed in claim 3, wherein the processor (700) is further configured to perform the global calibration by assigning global coordinate values to the calibration pattern and mapping the locations of the plurality of cameras (600) to the global coordinate values.

5. An electrode assembly manufacturing device, comprising:
a plurality of electrode plate supply parts, each of which supplies any one electrode plate of an anode or a cathode;
a separation membrane supply part (400) which supplies a separation membrane (SP) between electrode plates supplied from the plurality of electrode plate supply parts;
a folding part (550) which moves with respect to a stack table (100) to fold the separation membrane (SP) on the stack table (100);
a plurality of cameras (600) installed above the stack table (100) and which capture edge images of the electrode plates stacked on the stack table (100) whenever the electrode plates are stacked on the stack table (100); and
a processor (700) which is configured to calculate corner points of the electrode plates based on the edge images of the electrode plates captured by the plurality of cameras (600).

6. The electrode assembly manufacturing device as claimed in claim 5, further comprising a guide part (500) on a moving path of the separation membrane (SP) from the separation membrane supply part (400) to the folding part (550) and guides movement of the separation membrane (SP),
wherein the plurality of cameras (600) include:
a first camera (601) installed at one side of a first end guide member (506a) of the guide part (500) to capture a first edge image of a first electrode plate;
a second camera (602) installed at an other side of the first end guide member (506a) of the guide part (500) to capture a second edge image of the first electrode plate;
a third camera (603) installed at one side of a second end guide member (506b) of the guide part (500) to capture a third edge image of a second electrode plate; and
a fourth camera (604) installed at an other side of the second end guide member (506b) of the guide part (500) to capture a fourth edge image of the second electrode plate.

7. The electrode assembly manufacturing device as claimed in claim 5 or 6, wherein the processor (700) is further configured to:
generate a first edge line connecting coordinates between the plurality of cameras (600) on a first edge image and a second edge image of a first electrode plate and a third edge image and a fourth edge image of second electrode plate captured by the plurality of cameras (600) in a straight line and a second edge line being a straight line perpendicular to the first edge line; and
calculate an intersecting point at which the first edge line and the second edge line intersect as a corner point of the first electrode plate and the second electrode plate.

8. The electrode assembly manufacturing device as claimed in any one of claims 5 to 7, wherein the processor (700) is further configured to calculate a distance between the first electrode plate and the second electrode plate using coordinates of corner points of the first electrode plate calculated from previously captured edge images of the first electrode plate and coordinates of corner points of the second electrode plate calculated from currently captured edge images of the second electrode plate.

9. A method of calibrating a camera (600), the method comprising:
mounting a calibration board to which a predefined calibration pattern has been applied on an upper surface of a stack table (100);
receiving, by a processor (700), calibration board images from a plurality of cameras (600); and
performing, by the processor (700), calibration on each of the plurality of cameras (600) based on calibration patterns of the calibration board images.

10. The method as claimed in claim 9, wherein the receiving includes the processor (700):
moving each of the plurality of cameras (600) on the calibration board based on location information of a manufacturing target electrode plate; and
receiving the calibration board images captured by each of the plurality of cameras (600).

11. The method as claimed in claim 9 or 10, wherein, in performing the calibration, the processor (700):
measures optical parameter information including at least one of focus, brightness, and resolution of each of the plurality of cameras (600) based on the calibration pattern, resulting in measured optical parameter information; and
calibrates the measured optical parameter information according to a preset target value.

12. The method as claimed in any one of claims 9 to 11, wherein the predefined calibration pattern includes:
a first pattern for local calibration for calibrating optical parameters and locations of the plurality of cameras (600); and
a second pattern for global calibration for setting coordinates of the plurality of cameras (600) to global coordinates.

13. The method as claimed in claim 12, wherein, in performing the calibration, the processor (700) performs the global calibration by assigning the calibration pattern to global coordinate values and mapping locations of the plurality of cameras (600) to the global coordinate values.

14. The method as claimed in any one of claims 9 to 13, further comprising, after the performing of the calibration, if the calibration board is removed from the stack table (100) and a separation membrane (SP) is alternately stacked between a first electrode plate and a second electrode plate on the stack table (100):
receiving, by the processor (700), edge images of at least one of the first electrode plate, the second electrode plate, and the separation membrane (SP) stacked on the stack table (100) from one of the plurality of cameras (600) whenever the at least one of the first electrode plate, the second electrode plate, and the separation membrane (SP) is stacked on the stack table (100); and
calculating, by the processor (700), corner points of a corresponding electrode plate based on the edge images.

15. The method as claimed in claim 14, further comprising, after the calculating of the corner points, calculating, by the processor (700), a distance between the first electrode plate and the second electrode plate using the corner points of the first electrode plate and the corner points of the second electrode plate.
